# EUROPEAN PATENT SPECIFICATION

(11) **EP 3 953 408 B1**
(45) Date of publication and mention of the grant of the patent: **31.05.2023**
(21) Application number: 20716495.5
(22) Date of filing: 09.04.2020
(51) Int. Cl.: C08G 59/50, C08L 63/00

(54) **CURABLE TWO-COMPONENT RESIN-BASED SYSTEM**
HÄRTBARES HARZBASIERTES ZWEIKOMPONENTENSYSTEM
SYSTÈME À DEUX COMPOSANTS À BASE DE RÉSINE DURCISSABLE

(30) Priority: 11.04.2019 EP 19168605
(43) Date of publication of application: 16.02.2022
(73) Proprietor: Huntsman Advanced Materials Licensing (Switzerland) GmbH, 4057 Basel (CH)
(72) Inventor: BEISELE, Christian, 79379 Müllheim (DE); COLLIARD, Sophie, 68510 Uffheim (FR)
(74) Representative: Weidner Stern Jeschke
(86) International application number: PCT/EP2020/060147
(87) International publication number: WO 2020/208136

(56) References cited:
- WO-A1-2018/140576
- US-A- 6 001 902
- US-A1- 2017 355 848

## Description

### Technical Field

The present disclosure is related to curable two-component resin-based systems, cured articles obtainable therefrom and uses thereof.

### Background

Curable resin-based systems are widely known for various purposes. One purpose of high interest in the context of e-mobility is the use of such systems for the encapsulation of stators and/or rotors of electrical motors, usually by casting.

Curable resin-based systems for such purposes are known in the prior art for a long time.

GB 930185 A, for example, describes epoxy cast stators already back in 1958.

DE 41 32 982 A1 is related to formulations for stator potting based on anhydride-curing technology. Polyoxyalkylene amines with > 2000 g/mol are described as additives for increasing elasticity and strength of the resin.

CN 206259760 U and DE 10 2016 200 186 A1 are outlining the concept of stator encapsulation, but not giving details on the resin systems used.

US6001902A discloses a resin from a liquid diglycidyl ether of bisphenol A, Silicone^{®}SH 5500 as antifoam, γ-glycidyloxypropyltrimethoxysilane and needle-shaped wollastonite. However, a composition comprising a block-copolymer with silicone and organic blocks is not disclosed.

The textbook "Leichtbautechnologien im Automobilbau" (Siebenpfeiffer, Wolfgang: Leichtbautechnologien im Automobilbau: Werkstoffe - Fertigung - Konzepte; ISBN 978-3-658-04025-3; Springer-Verlag; 6 December 2013; pages 34-37) describes stator encapsulations and discusses several concepts in general.

WO 2018/140576 A1 (not published as yet) describes systems based on epoxy resin, polyoxyalkylene amines as hardeners and silane.

However, none of the curable resin-based systems described in the prior art achieves optimum characteristics for casting systems for stator or rotor encapsulation.

### Object of the Disclosure

In view of the drawbacks of the prior art, it is an object of the present disclosure to provide a curable two-component resin-based anhydride-free system achieving a thermal conductivity of > 1.10 W/mK, a low coefficient of thermal expansion (CTE) of < 21 ppm/K, a high critical stress intensity factor of > 4 MPa m^{0.5}, a good flowability and a fast reactivity.

This object is achieved by a curable two-component resin-based system as defined in claim 1.

### Disclosure

Unless otherwise defined herein, technical terms used in connection with the present disclosure shall have the meanings that are commonly understood by those having ordinary skill in the art. Further, unless otherwise required by context, singular terms shall include pluralities and plural terms shall include the singular.

All patents, published patent applications, and non-patent publications mentioned in the specification are indicative of the level of skill of those skilled in the art to which the present disclosure pertains.

All of the compositions and/or methods disclosed herein can be made and executed without undue experimentation in light of the present disclosure. While the compositions and methods of the present disclosure have been described in terms of preferred embodiments, it will be apparent to those having ordinary skill in the art that variations may be applied to the compositions and/or methods and in the steps or sequences of steps of the methods described herein without departing from the scope of the present disclosure. All such similar substitutes and modifications apparent to those skilled in the art are deemed to be within the scope of the present disclosure.

As utilized in accordance with the present disclosure, the following terms, unless otherwise indicated, shall be understood to have the following meanings.

The use of the word "a" or "an", when used in conjunction with the term "comprising", "including", "having", or "containing" (or variations of such terms) may mean "one", but it is also consistent with the meaning of "one or more", "at least one", and "one or more than one".

The use of the term "or" is used to mean "and/or" unless clearly indicated to refer solely to alternatives and only if the alternatives are mutually exclusive.

Throughout this disclosure, the term "about" is used to indicate that a value includes the inherent variation of error for the quantifying device, mechanism, or method, or the inherent variation that exists among the subject(s) to be measured. For example, but not by way of limitation, when the term "about" is used, the designated value to which it refers may vary by plus or minus ten percent, or nine percent, or eight percent, or seven percent, or six percent, or five percent, or four percent, or three percent, or two percent, or one percent, or one or more fractions therebetween.

The use of "at least one" will be understood to include one as well as any quantity more than one, including but not limited to, 1, 2, 3, 4, 5, 10, 15, 20, 30, 40, 50, 100, etc. The term "at least one" may extend up to 100 or 1000 or more depending on the term to which it refers. In addition, the quantities of 100/1000 are not to be considered as limiting since lower or higher limits may also produce satisfactory results.

As used herein, the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or openended and do not exclude additional, unrecited elements or method steps.

The phrases "or combinations thereof" and "and combinations thereof" as used herein refers to all permutations and combinations of the listed items preceding the term. For example, "A, B, C, or combinations thereof" is intended to include at least one of: A, B, C, AB, AC, BC, or ABC and, if order is important in a particular context, also BA, CA, CB, CBA, BCA, ACB, BAC, or CAB. Continuing with this example, expressly included are combinations that contain repeats of one or more items or terms such as BB, AAA, CC, AABB, AACC, ABCCCC, CBBAAA, CABBB, and so forth. The skilled artisan will understand that typically there is no limit on the number of items or terms in any combination, unless otherwise apparent from the context. In the same light, the terms "or combinations thereof" and "and combinations thereof" when used with the phrases "selected from" or "selected from the group consisting of" refers to all permutations and combinations of the listed items preceding the phrase.

The phrases "in one embodiment", "in an embodiment", "according to one embodiment", and the like generally mean the particular feature, structure, or characteristic following the phrase is included in at least one embodiment of the present disclosure, and may be included in more than one embodiment of the present disclosure. Importantly, such phrases are non-limiting and do not necessarily refer to the same embodiment but, of course, can refer to one or more preceding and/or succeeding embodiments. For example, in the appended claims, any of the claimed embodiments can be used in any combination.

The present invention is related to a curable two-component resin-based system comprising
(a) a resin component, comprising (i) at least one epoxy resin, (ii) a block-copolymer comprising silicone and organic blocks, (iii) a silane, and (iv) a filler comprising aluminium oxide and wollastonite, and
(b) a hardener component, comprising at least one polyoxyalkylene polyamine,
wherein the curable system contains in total > 60 wt% filler with a ratio of wollastonite to aluminium oxide of 50 to 75 wt% wollastonite and 25 to 50 wt% aluminium oxide, and wherein the hardener component (b) does not comprise any anhydride.

The curable two-component resin-based system wherein the curable system contains in total > 60 wt% filler is characterized by a higher fracture toughness K1C and G1C, a short gel time and requires only a short curing time.

In one embodiment of the present disclosure, the hardener component (b) also comprises a filler comprising aluminium oxide and wollastonite. Thus, in this embodiment, both the resin component (a) and the hardener component (b) each comprises a filler comprising aluminium oxide and wollastonite (a), wherein the filler in the resin component (a) is preferably, but not necessarily, the same as the filler in the hardener component (b).

In a further embodiment, the curable system contains in total > 70 wt% filler. This allows the curable two-component resin-based system to show a particularly low gel time and furthermore once cured a low coefficient of thermal expansion CET (below Tg) and a high thermal conductivity.

In another embodiment, the curable system contains in total more than 60 wt% but less than 70 wt% filler. This allows the curable two-component resin-based system to show a high flowability (low viscosity) and once cured a particular high elongation at break.

In a preferred embodiment, the ratio of wollastonite to aluminium oxide in the system is 60 to 70 wt% wollastonite and 30 to 40 wt% aluminium oxide, respectively, and preferably about 2/3 wollastonite and about 1/3 aluminium oxide by weight.

In one embodiment of the present disclosure, the aluminium oxide and the wollastonite each independently has an average particle size D50 of 0.1 um to 60 um, preferably 2 to 20 um, most preferred 4 to 6 um (for the aluminium oxide) and 5 to 15 um for the wollastonite.

Preferably, the resin component (a) contains the block-copolymer in an amount of 0.3 wt% to 10 wt%, preferably 1 wt% to 4 wt%.

In a further embodiment, the resin component (a) contains the silane in an amount of 0.01 wt% to 4 wt%, preferably 0.1 wt% to 1 wt%.

In another embodiment of the present disclosure, the resin composition (a) contains the at least one polyoxyalkylene polyamine in an amount of 5 wt% to 50 wt%, preferably 10 wt% to 25 wt%.

In a further embodiment, the hardener component (b) comprises at least one wetting agent.

In a preferred embodiment, the at least one wetting agent is a copolymer with acidic groups.

In a specifically preferred embodiment, the hardener component (b) contains the at least one wetting agent in an amount of 0.2 wt% to 10 wt%, preferably 1 wt% to 2.5 wt%.

A ratio of 100 pbw resin component (a) to 50 to 100 pbw, preferably 60 to 70 pbw, most preferably about 67 pbw hardener component (b) is preferred.

The present disclosure is also related to a cured article obtainable by curing the curable system as described above.

For obtaining the cured article of the present disclosure, the curable system has preferably been submitted to curing for a time of 4 hours or less at 120°C, preferably 2 hours or less at 120°C.

In one embodiment, the article exhibits an elongation at break of > 0.5 % elongation, preferably > 1 % elongation, as measured according to ISO 527.

In another embodiment, the article exhibits a fracture toughness K_{1C} of > 2.6 MPa·m^{0.5} and a G_{1C} of > 700 J/m², preferably a K_{1C} of > 4 MPa·m^{0.5} and a G_{1C} of > 1000 J/m², as measured by double torsion test (PM 216-0/89, dimension of test species: 80 × 34 × 4 mm; testing speed: 0.50 mm/min).

In a preferred embodiment, the article exhibits a thermal conductivity of > 0.7 W/mK, preferably > 1 W/mK, as measured according to ISO 8894-1.

In a further embodiment, the article exhibits a coefficient of thermal expansion (CTE) of < 35 ppm/K, preferably < 21 ppm/K, as measured according to ISO 11359-2.

The present disclosure is also related to the use of a cured article as described above for electrical applications, in particular for encapsulation of stators and/or rotors of electrical motors.

Surprisingly, the specific combination of features of the present disclosure results in achieving the required characteristics to obtain improved casting systems for encapsulating stators and/or rotors of electrical motors.

The epoxy resin used for the presently disclosed curable system may be any kind of epoxy resin without any specific limitation. The epoxy resin may, for example, be a polyglycidylether, a cycloaliphatic epoxy resin, an N-glycidyl compound or a combination thereof.

The polyglycidylether may, for example, be selected from the group consisting of bisphenol-A-diglycidylether, bisphenol-F-diglycidylether, 2,2-bis(4-hydroxy-3-methylphenyl)propane-diglycidylether, bisphenol-E-diglycidylether, 2,2-bis(4-hydroxyphenyl)butane-diglycidylether, bis(4-hydroxyphenyl)-2,2-dichloro-ethylene, bis(4-hydroxyphenyl)diphenylmethane-diglycidylether, 9,9-bis(4-hydroxyphenyl)fluorene-diglycidylether, 4,4'-cyclohexylidenebisphenol-diglycidyl-ether, epoxy phenol novolac and epoxy cresol novolac.

The cycloaliphatic epoxy resin may, for example, be selected from the group consisting of bis(epoxycyclohexyl)-methylcarboxylate, bis(4-hydroxy-cyclohexyl)methane-diglycidylether, 2,2-bis(4-hydroxy-cyclohexyl)propane-diglycidylether, tetrahydrophthalicacid-diglycidylester, hexahydrophthalicacid-diglycidylester, 4-methyltetrahydrophthalicacid-diglycidylester and 4-methylhexahydrophthalicacid-diglycidylester.

The N-glycidyl compound may be selected, for example, from the group consisting of N,N,N',N'-tetraglycidyl-4,4'-methylene-bis-benzeneamine, N,N,N',N'-tetraglycidyl-3,3'-diethyl-4,4'-diamino-diphenylmethane, 4,4'-methylene-bis[N,N-bis(2,3-epoxypropyl)aniline] and 2,6-dimethyl-N,N-bis[(oxiran-2-yl)methyl]aniline.

Specifically preferred epoxy resins are polyglycidyl ethers based on bisphenol, such as bisphenol-A diglycidylether.

Any silane suitable for use with epoxy resins may be incorporated into resin component (a). Because of specifically high compatibility with the epoxy resin, an epoxy-functional silane may be chosen.

As the block-copolymer with silicone and organic blocks (the organic blocks, for example being based on caprolactone or other lactones) preferably compounds such as Genioperl^{®} W35 (Wacker Chemie AG, Munich, Germany) may be used.

Extensive experiments have shown that the use of a specific combination of filler constituents, both in the resin component and in the hardener component, is essential for achieving the specific characteristics of the products of the present disclosure. The specific filler of the present disclosure comprises, and preferably consists of, aluminium oxide and wollastonite, wherein the ratio of wollastonite to aluminium oxide is 50 to 75 wt%, preferably 60 to 70 wt% wollastonite and 25 to 50 wt% preferably 30 to 40 wt% aluminium oxide. Most preferably, the ratio of wollastonite to aluminium oxide in the system is about 2/3 wollastonite and about 1/3 aluminium oxide by weight.

The hardener in harder component (b) may be any polyoxyalkylene polyamine which is suitable for curing epoxy resin compositions. Examples are the polyoxyalkylene diamines, polyoxyalkylene triamines and polyoxyalkylene polyamines sold under the tradename JEFFAMINE^{®} available from Huntsman Corp. or an affiliate thereof (The Woodlands, TX). Preferred hardeners are polyoxyalkylene diamines with a molecular weight of below or equal to 400 g/mol.

Another essential component of the system of the present disclosure is the at least wetting agent. Preferred examples are copolymers with acidic groups as those obtainable from Byk, such as Byk W 9010, W 995 and W 996.

Further additives may be added to both component (a) and (b), such as anti-settling agents, colouring agents, fumed silica and/or fumed alumina, or the like.

### Examples

More details and advantages will become obvious from the following examples. The components used therein, which are all available from Huntsman Corp. or an affiliate thereof (with exceptions as indicated), are as follows:

### Reactants

Araldite MY 740: bisphenol-A diglycidylether epoxy resin with an epoxy equivalent of 180-190 g/eq
Silane A 187: [3-(2,3-epoxypropoxy)propyl]trimethoxysilane; supplier: Momentive
Genioperl W35: block-copolymer with silicone and organic blocks; supplier: Wacker
Aerosil 200: Hydrophilic fumed silica; supplier: Evonik
Byk 7410 ET: rheologic additive (anti-settling agent); supplier: Byk
Alumina CL 4400 FG: Calcinated aluminium oxide with a D50 of 5.2 micron and a BET of 60m2/g, supplier: Almatis, Germany
Wollastonite: Calciummetasilicate (Ca₃Si₃O₉) with the following specification:
   particle size D50 of 9-16 microns
   < 45 microns 8415 wt%
   < 4 microns 26 -36 wt%
   < 2 microns < 28 wt%
   bulk density 0.88 - 0.97 g/cm³
   brightness, Ry >85%
   L/D ratio: 3:1
   supplier: Nordkalk, Finland
Aeroxide Alu C: Fumed alumina; supplier: Evonik
DW0137-1: Black colour paste (carbon black in epoxy resin)
JEFFAMINE^{®} D 230: Polyoxpropylene diamine
BYK W 9010: rheologic additive (wetting agent); supplier: Byk
Cab-O-Sil TS 720: Hydrophobic fumed silica; supplier: Cabot
BYK W 940: rheologic additive (antisettling agent); supplier: Byk
Araldite CW 229-3: Resin component of a commercially available, very tough system based on bisphenol-A epoxy
Araldite HW 229-1: Hardener component of a commercially available, very tough system based on methyl-tetrahydrophthalic anhydride
Araldite CW 30334: Resin component of a commercially available system with is offered for stator potting with a thermal conductivity of 1.1-1.2 W/mK which is based on bisphenol-A epoxy
Aradur HW 30335: Hardener component of a commercially available system with is offered for stator potting with a thermal conductivity of 1.1-1.2 W/mK which is based on methyl-tetrahydrophthalic anhydride
Araldite CW 30039: one-component epoxy system based on cycloaliphatic resin with very low CTE, commercially offered for rotor potting

### Methods

The elongation at break was measured according to ISO 527, fracture toughness K_{1C} and G_{1C} according to a double torsion test (PM 216-0/89, dimension of test species: 80 x 34 x 4 mm; testing speed: 0.50 mm/min), thermal conductivity according to ISO 8894-1 and coefficient of thermal expansion (CTE) according to ISO 11359-2.

### Comparative Example 1

300 g of Araldite CW 229-3 and 300 g of Araldite HW 229-1 are heated up separately to 50°C and then mixed together with a propeller stirrer for 5 min. The mixture is then de-aired in a vacuum chamber at about 1 mbar. Then the material is poured into metal moulds (preheated to 80°C) to prepare plates for the tests. The moulds are then put to an oven and the material is cured for 6 hours at 80°C and 10 hours at 140°C. After cooling down, the plates obtained after demoulding were cut into standard test specimens to determine Tg, CTE, K1C, G1C, flexural strength and tensile strength and thermal conductivity. The test results are given in Table 1.

### Comparative Example 2

300 g of Araldite CW 30334 and 300 g of Aradur HW 30335 are heated up separately to 50°C and then mixed together with a propeller stirrer for 5 min. The mixture is then de-aired in a vacuum chamber at about 1 mbar. Then the material is poured into metal moulds (preheated to 80°C) to prepare plates for the tests. The moulds are then put to an oven and the material is cured for 2 hours at 95°C + 1 hour at 95-130°C, then 2 hours at 130°C. After cooling down, the plates obtained after demoulding were cut into standard test specimens to determine Tg, CTE, K1C, G1C, flexural strength and tensile strength and thermal conductivity. The test results are given in Table 1.

### Comparative Example 3

400 g of Araldite CW 30039 are heated up to 60°C and stirred up with a propeller stirrer for 5 min. The material is then de-aired in a vacuum chamber at about 1 mbar. Then the material is poured into metal moulds (preheated to 80°C) to prepare plates for the tests. The moulds are then put to an oven and the material is cured for 1 hour at 120°C + 1.5 hours at 180°C. After cooling down, the plates obtained after demoulding were cut into standard test specimens to determine Tg, CTE, K1C, G1C, flexural strength and tensile strength and thermal conductivity. The test results are given in Table 1.

### Example 1

Resin component (a) is prepared as follows:

321.2 g of Araldite MY 740 and 21.13 g of Genioperl W35 were put into a mixer (with anchor stirrer and disperser blade) and then heated up to 80°C while mixing with 60 rpm anchor stirrer for 30 min (until Genioperl W35 is well dissolved).

Then 5.28 g of DW 0137-1 is added and the mass is cooled to 50°C while stirring further.

Then 1.76 g of Silane A 187 and 2.52 g of Byk 7410 ET are added to the mass and mixed in during 3 min at 240 rpm.

Then 179.61 g of Alumina CL 4400 FG are added and mixed in for 5 min at 240 rpm.

Then 17.61 g of Aeroxide Alu C are added into the mixture in 3 portions. Thereafter 1.76 g Aerosil 200 are added and each time mixed at 50°C for 5 min at 240 rpm.

Then the 445.6 g of Wollastonite are added in 4 portions and each time mixed in during 5 min at 240 rpm with anchor stirrer and 400 rpm with disperser blade.

Finally, after scratching down not yet wetted filler into the mixture, the whole mass is mixed with a disperser blade at 400 rpm and the anchor stirrer at 240 rpm together for 15 min under vacuum.

Hardener component (b) is prepared as follows:

141.02 g of JEFFAMINE^{®} D 230 and 20 g of Byk W 9010 were put into a mixer (with anchor stirrer and disperser blade) and then heated up to 90 °C while mixing with 240 rpm anchor stirrer for 20 min and then cooled to 50°C.

Then 256.86 g of Alumina CL 4400 FG are added and mixed in for 5 min with 240 rpm anchor stirrer.

Then 25.18 g of Aeroxide Alu C are added into the mixture in 3 portions. Then 5.0 g of Cab-O-Sil TS 720 are added and each time mixed at 50°C for 5 min with 240 rpm anchor stirrer.

Then ¼ of 544.94 g of Wollastonite are added and mixed at 50°C for 5 min with 240 rpm anchor stirrer and 400 rpm disperser blade.

Then 7.0 g of Byk W 940 are added and stirred in for 5 min with 240 rpm anchor stirrer and 400 rpm disperser blade.

Then ¾ of 544.94 g of Wollastonite are added in 3 portions and mixed at 50°C for 5 min with 240 rpm anchor stirrer and 400 rpm disperser blade.

Finally, after scratching down not yet wetted filler into the mixture, the whole mass is mixed with a disperser blade at 400 rpm and the anchor stirrer at 240 rpm together for 15 min under vacuum.

### Preparation of final mixture of (a) and (b)

100 g of premixture (a) (tempered to 50°C) and 67 g of premixture (b) (tempered to 50°C) are mixed together for about 5 min with anchor stirrer at 240 rpm and then degassed under vacuum.

Then the reactive mixture of (a) and (b) is poured into metal moulds (preheated to about 80°C) to produce test specimens. The moulds are then put to an oven and the material is cured for 2 hours at 120°C.

After cooling to room temperature, the test specimens got demoulded and prepared for measurements, e.g. of mechanical data. The test results are given in Table 1.

The parameters are then determined under standard conditions as given in Table 1.

### Example 2

A resin component (a) was prepared as in example 1. Pure (in particular unfilled) JEFFAMINE^{®} D 230 was used as hardener component (b). A final mixture of (a) and (b) was prepared in an amount of 9.5 pbw JEFFAMINE^{®} D 230 (b) per 100 pbw of resin (a) and treated as in example 1.

**Table 1**

| | **Comparative Example 1 (Araldite CW 229-3 / Aradur HW 229-1)** | **Comparative Example 2 (Araldite CW 30334 / Aradur HW 30335)** | **Comparative Example 3 (CW 30039)** | **Example 1** | **Example 2** |
|---|---|---|---|---|---|
| **Chemistry** | Epoxy anhydride based | Epoxy anhydride based | | Epoxy amine based | Epoxy amine based |
| **Ratio resin / hardener** | 100 / 100 pbw | 100 / 75 pbw | single component | 100 / 67 pbw | 100 / 9.5 |
| **Viscosity mix 60°C** | 2000 mPas | 3000- 5000 mPas | 15000 mPas | | |
| | | | 7000 mPas | 5300 mPas | 900 mPas |
| **Viscosity mix 80°C** | 800 mPas | 1200- 1800 mPas | | 2300 mPas | 450 mPas |
| **Gel time (gel norm) 60°C** | 300 min | ∼2000 min | | 67 min | 85 min |
| **Gel time (gel norm) 80°C** | 70 min | ∼400 min | | 27 min | 29 min |
| **Get time (gel norm) 100°C** | 16 min | 85 min | 77 min | 11 min | 10 min. |
| **Gel time (gel norm) 120°C** | 6 min | 20 min | 8 min | 5 min | 4.3 min |
| **Curing cycle** | 6 h 80 °C + 10 h 140 °C | 2h 95°C + 1h 95→130°C + | 1 h 120°C + 1.5 h 180°C | 2h 120°C | 2h 120°C |
| | | 2h 130°C | Total 2.5 h | | |
| **Glass transition temperature Tg** | 110 -125 °C | 90- 105°C | 184 °C | 70 - 80°C | 70 - 80°C |
| **Tensile strength** | 80 MPa | 65 - 80 MPa | 75 MPa | 55 MPa | 62 |
| **Elongation at break** | 1.4 % | 0.5 - 0.8% | 0.6 % | 1.3% | 2.2 % |
| **E-modulus from tensile strength** | 10500 MPa | 15000-18000MPa | 15154 MPa | 11300 MPa | 9040 MPa |
| **Flexural strength** | 125 MPa | 100 - 130 MPa | 122 MPa | 106 MPa | |
| **Surface strain** | 1.5 % | 0.5 - 1.0% | 0.8 % | 1.1% | |
| **E-modulus from flexural strength** | 98000 MPa | 15000-18000MPa | 16500 MPa | 11300 MPa | |
| **Double torsion** | | | | | |
| **K1c** | 2.9 MPa.m^{1/2} | 2.9-3.2 MPa.m^{1/2} | 2.4 MPa m^{1/2} | > 4.1 MPa.m^{1/2} | 3.9MPa.m^{1/2} |
| **G1c** | 710 J/m² | 470 - 570 J/m² | 320 J/m² | 1100 J/m² | 1560 J/m² |
| **Coefficient of thermal expansion CET below Tg** | 27 - 30^{∗}10⁻⁶ K⁻¹ | 22 - 26^{∗}10⁻⁶ K⁻¹ | 19.7 ppm/K | 19-21^{∗}10⁻⁶ K⁻¹ | 30^{∗}10⁻⁶ K⁻¹ |
| **Thermal conductivity** | 0.7 W/mK | 1.1 - 1.2 W/mK | 0.66 W/mK | 1.1 W/mK | 0.8 W/mK |

The comparison of the system of Example 1 with the three Comparative Examples highlights the unusual high performance of the system of the present disclosure, as it combines several aim-conflicting features:
1. Good flowability (indicated by a viscosity of less than 3 Pas at 80°C) with
2. Short curing time (only 2 hours) at a mild temperature (120°C)
3. Ultra-high toughness (K1C > 4 MPa.m^{1/2} and a G1C of > 1000 J/m²)
4. An elongation at break of > 1%
5. A CTE of < 21 ppm/K
6. A thermal conductivity of > 1 W/mK
7. Anhydride-free

The combination of low CTE and superior toughness makes the system of the present disclosure very useful for encapsulation of critical stators and/or rotors, where the metal edges might introduce cracks during temperature changes. It is flowable into narrow gaps, provides the necessary thermal conductivity and is curing fast. Therefore, the system of the present disclosure can well be applied in automatic pressure gelation (APG) processes, depending on geometry and thermal and timing conditions even without post-curing.

The system of Comparative Example 1 is a widely used very tough epoxy system based on wollastonite filler. The system provides quite high (but compared to the system of the present disclosure, less toughness) and good flowability. However, it does not deliver a very low CTE, thermal conductivity is not as good as required and it needs much longer curing time.

The system of Comparative Example 2 targets to deliver the desired thermal conductivity of > 1.1 W/mK. It also provides good flowability. However, the toughness is lower compared to Example 1 and the CTE is significantly higher and it needs more severe curing conditions.

As the CTE for the systems of Comparative Examples 1 and 2 is significantly higher, there is stress due to mismatch of CTE of epoxy vs. metal parts, which may lead to cracks under thermal cycling conditions and cannot be handled by the available toughness quality of those systems. Therefore, the combination of worse CTE and worse toughness (in the systems of Comparative Examples 1 and 2) may lead to a higher risk of cracking.

The system of Comparative Example 3 is an anhydride-free epoxy system which provides a very low CTE, thus leading to low stress in the application. However, it lacks toughness compared to the system of the present disclosure, the thermal conductivity is much lower and the curing needs much more severe conditions. Finally, the flowability is not as good due to the higher viscosity.

The above-disclosed subject matter is to be considered illustrative, and not restrictive, and the appended claims are intended to cover all such modifications, enhancements, and other embodiments, which fall within the true scope of the present invention. Thus, to the maximum extent allowed by law, the scope of the present invention is to be determined by the broadest permissible interpretation of the following claims, and shall not be restricted or limited by the foregoing detailed description.

## Claims

1. A curable two-component resin-based system, comprising
(a) a resin component, comprising (i) at least one epoxy resin, (ii) a block-copolymer comprising silicone and organic blocks, (iii) a silane, and (iv) a filler comprising aluminium oxide and wollastonite, and
(b) a hardener component, comprising at least one polyoxyalkylene polyamine,
wherein the curable system contains in total > 60 wt% filler with a ratio of wollastonite to aluminium oxide of 50 to 75 wt% wollastonite and 25 to 50 wt% aluminium oxide, and wherein the hardener component (b) does not comprise any anhydride.

2. The curable system according to claim 1, wherein the hardener component (b) also comprises a filler comprising aluminium oxide and wollastonite.

3. The curable system according to claim 2, wherein the curable system contains in total > 70 wt% filler.

4. The curable system according to any of the preceding claims, wherein the ratio of wollastonite to aluminium oxide in the system is 60 to 70 wt% wollastonite and 30 to 40 wt% aluminium oxide, respectively, and preferably about 2/3 wollastonite and about 1/3 aluminium oxide by weight.

5. The curable system according to any of the preceding claims, wherein the aluminium oxide and the wollastonite each independently has an average particle size D50 of 0.1 um to 60 um, preferably 2 um to 20 µm.

6. The curable system according to any of the preceding claims, wherein the resin component (a) contains the block-copolymer in an amount of 0.3 wt% to 10 wt%, preferably 1 wt% to 4 wt%.

7. The curable system according to any of the preceding claims, wherein the resin component (a) contains the silane in an amount of 0.01 wt% to 4 wt%, preferably 0.1 wt% to 1 wt%.

8. The curable system according to any of the preceding claims, wherein the resin composition (a) contains the at least one polyoxyalkylene polyamine in an amount of 5 wt% to 50 wt%, preferably 10 wt% to 25 wt%.

9. The curable system according to any of the preceding claims, wherein the hardener component (b) comprises at least one wetting agent.

10. The curable system according to claim 9, wherein the at least one wetting agent is a copolymer with acidic groups.

11. The curable system according to claim 9 or 10, wherein the hardener component (b) contains the at least one wetting agent in an amount of 0.2 wt% to 10 wt%, preferably 1 wt% to 2.5 wt%.

12. A cured article obtainable by curing the curable system according to any of the preceding claims.

13. The cured article according to claim 12, wherein the curable system has been submitted to curing for a time of 4 hours or less at 120°C, preferably 2 hours or less at 120°C.

14. The cured article according to claim 12 or 13, wherein the article exhibits an elongation at break of > 0.5 % elongation, preferably > 1 % elongation, as measured according to ISO 527.

15. The cured article according to any of claims 12 to 14, wherein the article exhibits a fracture toughness K1C of > 2.6 MPa·m0.5 and a G1C of > 700 J/m2, preferably a K1C of > 4 MPa·m0.5 and a G1C of > 1000 J/m2, as measured by double torsion test (PM 216-0/89, dimension of test species: 80 x 34 x 4 mm; testing speed: 0.50 mm/min).

16. The cured article according to any claims 12 to 15, wherein the article exhibits a thermal conductivity of > 0.7 W/mK, preferably > 1 W/mK, as measured according to ISO 8894-1.

17. The cured article according to any of claims 12 to 16, wherein the article exhibits a coefficient of thermal expansion (CTE) of < 35 ppm/K, preferably < 21 ppm/K, as measured according to ISO 11359-2.

18. Use of a cured article according to any of claims 12 to 17 for electrical applications, in particular for encapsulation of stators and/or rotors of electrical motors.

## Patentansprüche

1. Härtbares harzbasiertes Zweikomponentensystem, umfassend
(a) eine Harzkomponente, umfassend (i) wenigstens ein Epoxidharz, (ii) ein Blockcopolymer, umfassend Silikon- und organische Blöcke, (iii) ein Silan und (iv) einen Füllstoff, umfassend Aluminiumoxid und Wollastonit, und
(b) eine Härterkomponente, umfassend wenigstens ein Polyoxyalkylenpolyamin,
wobei das härtbare System insgesamt > 60 Gew.-% Füllstoff mit einem Verhältnis von Wollastonit zu Aluminiumoxid von 50 bis 75 Gew.-% Wollastonit und 25 bis 50 Gew.-% Aluminiumoxid enthält und wobei die Härterkomponente (b) keinerlei Anhydrid umfasst.

2. Härtbares System nach Anspruch 1, wobei die Härterkomponente (b) auch einen Füllstoff, umfassend Aluminiumoxid und Wollastonit, umfasst.

3. Härtbares System nach Anspruch 2, wobei das härtbare System insgesamt > 70 Gew.-% Füllstoff enthält.

4. Härtbares System nach einem der vorangehenden Ansprüche, wobei das Verhältnis von Wollastonit zu Aluminiumoxid im System 60 bis 70 Gew.-% Wollastonit und entsprechend 30 bis 40 Gew.-% Aluminiumoxid beträgt und vorzugsweise gewichtsbezogen etwa 2/3 Wollastonit und etwa 1/3 Aluminiumoxid.

5. Härtbares System nach einem der vorangehenden Ansprüche, wobei das Aluminiumoxid und das Wollastonit unabhängig jeweils eine durchschnittliche Teilchengröße D50 von 0,1 µm bis 60 µm besitzt, vorzugsweise 2 µm bis 20 µm.

6. Härtbares System nach einem der vorangehenden Ansprüche, wobei die Harzkomponente (a) das Blockcopolymer in einer Menge von 0,3 Gew.-% bis 10 Gew.-% enthält, vorzugsweise 1 Gew.-% bis 4 Gew.-%.

7. Härtbares System nach einem der vorangehenden Ansprüche, wobei die Harzkomponente (a) das Silan in einer Menge von 0,01 Gew.-% bis 4 Gew.-% enthält, vorzugsweise 0,1 Gew.-% bis 1 Gew.-%.

8. Härtbares System nach einem der vorangehenden Ansprüche, wobei die Harzzusammensetzung (a) das wenigstens eine Polyoxyalkylenpolyamin in einer Menge von 5 Gew.-% bis 50 Gew.-% enthält, vorzugsweise 10 Gew.-% bis 25 Gew.-%.

9. Härtbares System nach einem der vorangehenden Ansprüche, wobei die Härterkomponente (b) wenigstens ein Benetzungsmittel umfasst.

10. Härtbares System nach Anspruch 9, wobei das wenigstens eine Benetzungsmittel ein Copolymer mit sauren Gruppen ist.

11. Härtbares System nach Anspruch 9 oder 10, wobei die Härterkomponente (b) das wenigstens eine Benetzungsmittel in einer Menge von 0,2 Gew.-% bis 10 Gew.-% enthält, vorzugsweise 1 Gew.-% bis 2,5 Gew.-%.

12. Gehärteter Gegenstand erhältlich durch Härten des härtbaren Systems nach einem der vorangehenden Ansprüche.

13. Gehärteter Gegenstand nach Anspruch 12, wobei das härtbare System einer Härtung für einen Zeitraum von 4 Stunden oder weniger bei 120°C unterworfen worden ist, vorzugsweise 2 Stunden oder weniger bei 120°C.

14. Gehärteter Gegenstand nach Anspruch 12 oder 13, wobei der Gegenstand eine Verlängerung nach Bruch von > 0,5 % Verlängerung zeigt, vorzugsweise > 1 % Verlängerung, wie gemessen gemäß ISO 527.

15. Gehärteter Gegenstand nach einem der Ansprüche 12 bis 14, wobei der Gegenstand eine Bruchzähigkeit K1C von > 2,6 MPa • m^{0,5} und eine G1C von > 700 J/m² zeigt, vorzugsweise eine K1C von > 4 MPa • m^{0,5} und eine G1C von > 1000 J/m², wie gemessen mit Doppeltorsionstest (PM216-0/89, Abmessung der Testproben: 80 x 34 x 4 mm; Testgeschwindigkeit: 0,5 mm/min).

16. Gehärteter Gegenstand nach einem der Ansprüche 12 bis 15, wobei der Gegenstand eine Wärmeleitfähigkeit von > 0,7 W/mK zeigt, vorzugsweise > 1 W/mK, wie gemessen gemäß ISO 8894-1.

17. Gehärteter Gegenstand nach einem der Ansprüche 12 bis 16, wobei der Gegenstand einen Wärmeausdehnungskoeffizienten (CTE) von < 35 ppm/K zeigt, vorzugsweise < 21 ppm/K, wie gemessen gemäß ISO 11359-2.

18. Verwendung eines gehärteten Gegenstandes nach einem der Ansprüche 12 bis 17 für elektrische Anwendungen, insbesondere zur Einkapselung von Statoren und/oder Rotoren von elektrischen Motoren.

## Revendications

1. Système à deux composants à base de résine durcissable, comprenant
(a) un composant de résine, comprenant (i) au moins une résine époxy, (ii) un copolymère séquencé comprenant des blocs silicone et organiques, (iii) un silane, et (iv) une charge comprenant de l'oxyde d'aluminium et de la wollastonite, et
(b) un composant durcisseur comprenant au moins une polyoxyalkylène-polyamine,
dans lequel le système durcissable contient au total > 60 % en poids de charge avec un rapport de la wollastonite à l'oxyde d'aluminium de 50 à 75 % en poids de wollastonite pour 25 à 50 % en poids d'oxyde d'aluminium, et dans lequel le composant durcisseur (b) ne comprend aucun anhydride.

2. Système durcissable selon la revendication 1, dans lequel le composant durcisseur (b) comprend également une charge comprenant de l'oxyde d'aluminium et de la wollastonite.

3. Système durcissable selon la revendication 2, dans lequel le système durcissable contient au total > 70 % en poids de charge.

4. Système durcissable selon l'une quelconque des revendications précédentes, dans lequel le rapport de la wollastonite à l'oxyde d'aluminium dans le système est de 60 à 70 % en poids de wollastonite pour 30 à 40 % en poids d'oxyde d'aluminium, respectivement, et de manière préférée est d'environ 2/3 de wollastonite pour 1/3 d'oxyde d'aluminium en poids.

5. Système durcissable selon l'une quelconque des revendications précédentes, dans lequel l'oxyde d'aluminium et la wollastonite présentent chacun indépendamment une taille moyenne de particules D50 de 0,1 µm à 60 µm, de manière préférée de 2 µm à 20 µm.

6. Système durcissable selon l'une quelconque des revendications précédentes, dans lequel le composant de résine (a) contient le copolymère séquencé en une quantité de 0,3 % en poids à 10 % en poids, de manière préférée de 1 % en poids à 4 % en poids.

7. Système durcissable selon l'une quelconque des revendications précédentes, dans lequel le composant de résine (a) contient le silane en une quantité de 0,01 % en poids à 4 % en poids, de manière préférée de 0,1 % en poids à 1 % en poids.

8. Système durcissable selon l'une quelconque des revendications précédentes, dans lequel la composition de résine (a) contient l'au moins une polyoxyalkylène-polyamine en une quantité de 5 % en poids à 50 % en poids, de manière préférée de 10 % en poids à 25 % en poids.

9. Système durcissable selon l'une quelconque des revendications précédentes, dans lequel le composant durcisseur (b) comprend au moins un agent mouillant.

10. Système durcissable selon la revendication 9, dans lequel l'au moins un agent mouillant est un copolymère avec des groupes acides.

11. Système durcissable selon la revendication 9 ou 10, dans lequel le composant durcisseur (b) contient l'au moins un agent mouillant en une quantité de 0,2 % en poids à 10 % en poids, de manière préférée 1 % en poids à 2,5 % en poids.

12. Article durci pouvant être obtenu par le durcissement du système durcissable selon l'une quelconque des revendications précédentes.

13. Article durci selon la revendication 12, dans lequel le système durcissant a été soumis à un durcissement pendant une durée de 4 heures ou moins à 120 °C, de manière préférée de 2 heures ou moins à 120 °C.

14. Article durci selon la revendication 12 ou 13, dans lequel l'article affiche un allongement à la rupture > 0,5 % de l'allongement, de manière préférée > 1 % de l'allongement, tel que mesuré selon la norme ISO 527.

15. Article durci selon l'une quelconque des revendications 12 à 14, dans lequel l'article affiche une résistance à la rupture K1C > 2,6 MPa.m0,5 et une G1C > 700 J/m², de manière préférée une K1C > 4 MPa.m0,5 et une G1C > 1000 J/m², telles que mesurées par l'essai de la double torsion (PM 216-0/89, dimensions des échantillons testés : 80 x 34 x 4 mm ; vitesse de test : 0,50 mm/min).

16. Article durci selon l'une quelconque des revendications 12 à 15, dans lequel l'article affiche une conductivité thermique > 0,7 W/mK, de manière préférée > 1 W/mK, telle que mesurée selon la norme ISO 8894-1.

17. Article durci selon l'une quelconque des revendications 12 à 16, dans lequel l'article affiche un coefficient de dilatation thermique (CDT) < 35 ppm/K, de manière préférée < 21 ppm/K, tel que mesuré selon la norme ISO 11359-2.

18. Utilisation d'un article durci selon l'une quelconque des revendications 12 à 17 pour des applications électriques, en particulier pour l'encapsulation de stators et/ou de rotors de moteurs électriques.
